# EUROPEAN PATENT APPLICATION

(11) **EP 4 693 690 A1**
(43) Date of publication of application: **11.02.2026**
(21) Application number: 24793016.7
(22) Date of filing: 17.04.2024
(51) Int. Cl.: H01M 50/449, H01M 50/446, H01M 50/457, H01M 50/466, H01M 10/0583, H01M 10/052

(54) **SEPARATOR AND ELECTROCHEMICAL DEVICE INCLUDING SAME**

(30) Priority: 17.04.2023 KR 20230050349
(71) Applicant: LG Energy Solution, Ltd., Seoul 07335 (KR)
(72) Inventor: BAK, Byeong-Chan, Daejeon 34122 (KR); LEE, So-Yeong, Daejeon 34122 (KR); KWON, Su-Jee, Daejeon 34122 (KR); BAE, Won-Sik, Daejeon 34122 (KR)
(74) Representative: Hoffmann Eitle
(86) International application number: PCT/KR2024/005178
(87) International publication number: WO 2024/219831

(57) **Abstract**

The present disclosure relates to a separator, an electrode assembly and electrochemical device including the same, and the separator according to an embodiment of the present disclosure includes a porous substrate and a porous coating layer on each of two surfaces of the porous substrate, the porous coating layer including inorganic particles, wherein a total thickness of the separator is kept constant all over the separator, wherein the separator has an aspect ratio of 1 or more, and wherein based on a width direction of the separator, an interface between the porous substrate and each of the porous coating layers has a curved shape that is convex towards the porous substrate.

## Description

### TECHNICAL FIELD

The present disclosure relates to a separator and an electrochemical device including the same. More particularly, the present disclosure relates to a separator for use in an electrode assembly manufactured by an advanced-Z-stacking (AZS) method.

The present application claims priority to Korean Patent Application No. 2023-0050349 filed on April 17, 2023 in the Republic of Korea, the disclosure of which is incorporated herein by reference.

### BACKGROUND

Secondary batteries may be classified according to the structure of an electrode assembly of a positive electrode/separator/negative electrode structure. Representative examples may include a jelly-roll (wound) electrode assembly in which a long sheet type positive electrode and a long sheet type negative electrode are wound with a separator interposed between them, a Lamination and Stacking (L&S) electrode assembly in which a plurality of positive electrodes and a plurality of negative electrodes obtained by cutting into a predetermined size are arranged with a separator interposed between them to form a unit cell, and a plurality of unit cells is stacked in a sequential order, and a Zigzag Stacking (Z-stacking) electrode assembly in which a plurality of positive electrodes and a plurality of negative electrodes obtained by cutting into a predetermined size are stacked layer by layer in a zigzag with a long sheet type separator interposed between them. However, these existing electrode assemblies have some problems.

Since the jelly-roll (wound) electrode assembly is manufactured by densely winding the long sheet type positive electrode and the long sheet type negative electrode to form a cylindrical, or oval or elliptical structure in cross section, stress caused by expansion and contraction of the electrode during charging/discharging accumulates in the electrode assembly, and when the accumulated stress exceeds a predetermined limit, deformation occurs in the electrode assembly. The deformation in the electrode assembly induces a non-uniform distance between the electrodes, causing rapid performance degradation of the battery and internal shorts threatening the safety of the battery. Additionally, when winding the long sheet type positive electrode and the long sheet type negative electrode, it is difficult to wind the positive electrode and the negative electrode fast at the constant distance between them, resulting in low productivity.

In contrast, the L&S electrode assembly and the Z-stacking electrode assembly have higher stability and productivity than the jelly-roll electrode assembly, and are gaining more attention. Still, there are continued studies on these methods.

However, the L&S electrode assembly has advantages of high speed in the sequential stacking of the plurality of positive and negative electrode units and high space efficiency of the battery, but separator misalignment may cause defects in the battery, so the sequential stacking process requires a lot of time and efforts. Despite high productivity, there is a risk of instability. Additionally, because of using the long sheet type separator, the Z-stacking electrode assembly provides a more stable structure than the L&S electrode assembly, but has low process efficiency due to process complexity.

Accordingly, there is continuous research and development for new electrode assembly manufacturing methods in an effort to obtain the advantage of the L&S and the advantage of the Z-stacking and make up for their disadvantages.

For example, a method for manufacturing an Advanced Z-Stacking (AZS) electrode assembly is being developed, and there is a continuous effort to increase productivity and stability of the AZS electrode assembly having a large length.

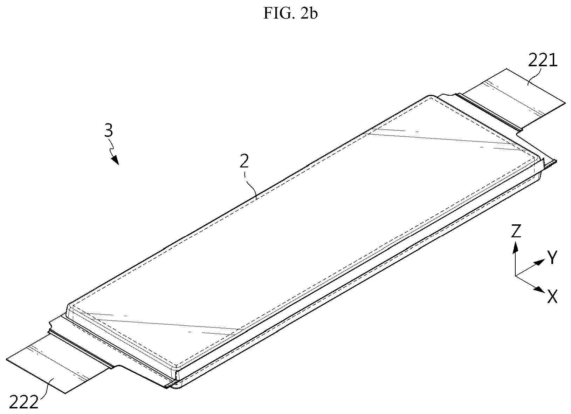

Referring to FIG. 2b, an electrochemical device including the AZS electrode assembly that is long in the length direction (Y direction) has insufficient wetting by electrolyte at the central portion of the separator. Specifically, after electrolyte injection, a poorly wetted area or an unwetted area is observed at the central portion of the separator, resulting in low performance of the battery using the same.

### SUMMARY

### Technical Problem

The present disclosure is directed to providing a separator for use in an electrode assembly with improved productivity and stability and an electrochemical device using the same.

Specifically, the present disclosure is directed to providing a separator for use in an advanced-Z-stacking (AZS) electrode assembly. More specifically, the present disclosure is directed to providing a separator with improved electrolyte wettability all over an AZS electrode assembly that is long in the length direction.

For example, the present disclosure is directed to providing a separator of a new structure for reducing or preventing unwetting by electrolyte in a central portion.

### Technical Solution

To solve the above-described problem, according to an aspect of the present disclosure, there is provided a separator of the following embodiments.

The separator according to a first embodiment includes a porous substrate and a porous coating layer on each of two surfaces of the porous substrate, the porous coating layer including inorganic particles, wherein a total thickness of the separator is kept constant all over the separator, wherein the separator has an aspect ratio of 1 or more, and wherein based on a width direction of the separator, an interface between the porous substrate and each of the porous coating layers has a curved shape that is convex towards the porous substrate.

According to a second embodiment, in the first embodiment, the porous substrate may be thinnest at a center of the separator in the width direction.

According to a third embodiment, in the first or second embodiment, the porous substrate may be thickest at an outermost end of the separator in the width direction.

According to a fourth embodiment, in any one of the first to third embodiments, the curved shape of the interface between the porous substrate and the porous coating layer may be symmetrical with respect to a center of the separator in the width direction.

According to a fifth embodiment, in any one of the first to fourth embodiments, the curved shapes of the two interfaces may be symmetrical with respect to a center of the separator in a thickness direction.

According to a sixth embodiment, in any one of the first to fifth embodiments, a thickness of the porous substrate may be from 40% to 90% of the total thickness 100% of the separator.

According to a seventh embodiment, in any one of the first to sixth embodiments, a thickness of the porous substrate may be from 45% to 65% of the total thickness 100% of the separator.

According to an eighth embodiment, in any one of the first to seventh embodiments, a thickness of the porous substrate may be from 40% to 55% of the total thickness of the separator at 50% of a total width of the separator.

According to a ninth embodiment, in any one of the first to eighth embodiments, a thickness of the porous substrate may be from 50% to 70% of the total thickness of the separator at 0% or 100% of a total width of the separator.

According to a tenth embodiment, in any one of the first to ninth embodiments, a length of the separator in a length direction may be from 1.5 to 5 m.

According to another aspect of the present disclosure, there is provided an electrode assembly of the following embodiments.

The electrode assembly according to an eleventh embodiment includes a unit positive electrode, a unit negative electrode and a separator between the unit positive electrode and the unit negative electrode, wherein the separator is folded in a zigzag, wherein the unit positive electrode and the unit negative electrode are arranged in an alternating manner at a plurality of areas in which the separator is folded and overlapped, and wherein the separator is defined in any one of the first to tenth embodiments.

According to a twelfth embodiment, in the eleventh embodiment, each of the unit positive electrode and the unit negative electrode may include an electrode tab at an end.

According to still another aspect of the present disclosure, there is provided an electrochemical device of the following embodiments.

The electrochemical device according to a thirteenth embodiment includes the electrode assembly according to the eleventh or twelfth embodiment and a case accommodating the electrode assembly.

According to a fourteenth embodiment, in the thirteenth embodiment, the electrochemical device may be a lithium secondary battery.

According to a fifteenth embodiment, in the thirteenth or fourteenth embodiment, the case may have a pouch-type, prismatic, cylindrical or coin-type shape.

### Advantageous Effects

The separator according to an embodiment of the present disclosure has a shape in which the porous substrate has a smaller thickness and the porous coating layer has a larger thickness at the central portion in a direction. Through this, even though the size increases, the separator may reduce the area unwetted by electrolyte at the central portion, and further, may be sufficiently wetted by electrolyte all over the entire area, thereby improving the wettability of the separator.

The separator according to an embodiment of the present disclosure may improve the wettability of the central portion and further, the wettability of the entire separator, thereby making it possible to increase the length of the separator. Accordingly, it may be possible to realize a high performance electrochemical device using a ZZS(Zig-Zag Stacking) electrode assembly or advanced-Z-stacking (AZS) electrode assembly manufactured by folding in a zigzag the strip type separator that is long in the length direction and inserting the unit electrode at the overlapped portion of the separator.

The separator according to an embodiment of the present disclosure may be used in the electrode assembly with improved stability and productivity.

### BRIEF DESCRIPTION OF THE DRAWINGS

FIG. 1a is a diagram of a conventional separator 1. The separator 1 may include a porous substrate 10 and a first porous coating layer 11 and a second porous coating layer 12, each of which is present on each of two surfaces of the porous substrate. In FIG. 1a, an X direction indicates a length direction of the separator 1, a Y direction indicates a width direction of the separator 1, and a Z direction indicates a thickness direction of the separator 1.
FIG. 1b shows a cross section of the conventional separator 1 in the width direction. Specifically, FIG. 1b shows the separator 1 having the first porous coating layer 11 and the second porous coating layer 12 on the two surfaces of the porous substrate 10 without a thickness gradient.

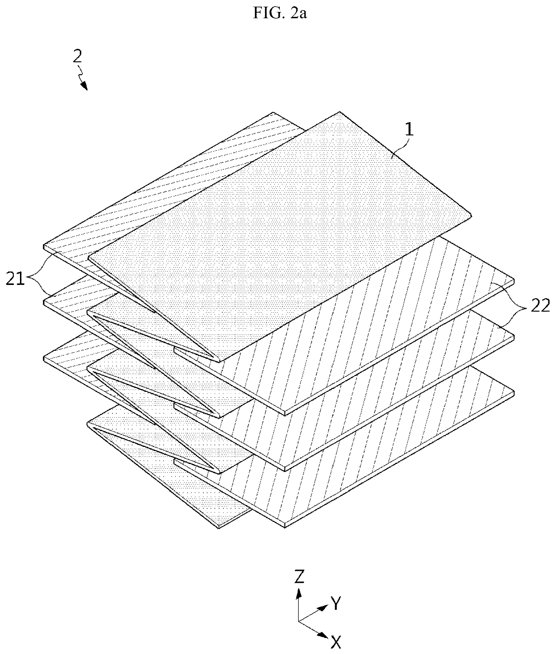

FIG. 2a is a diagram of an electrode assembly 2 assembled by an advanced-Z-stacking (AZS) or ZZS(Zig-Zag Stacking) method. Specifically, FIG. 2a shows the structure of the electrode assembly 2 in which the separator 1 is folded in a zigzag and a unit positive electrode 21 and a unit negative electrode 22 are disposed at the folded and overlapped area in an alternating manner. In FIG. 2a, the X direction indicates the width direction of the electrode assembly 2, the Y direction indicates the length direction of the electrode assembly 2, and the Z direction indicates the thickness direction of the electrode assembly 2.
FIG. 2b is a diagram of an electrode assembly 3 having a positive electrode tab 211 and a negative electrode tab 222, each electrode tab at each of two ends of the electrode assembly 2 including a stack of positive electrode/separator/negative electrode. In FIG. 2b, the X direction indicates the width direction of the electrode assembly 2, the Y direction indicates the length direction of the electrode assembly 2, and the Z direction indicates the thickness direction of the electrode assembly 2.
FIG. 2c is a cross-sectional view of the electrode assembly 2 assembled by an AZS or ZZS method using the conventional separator 1.
FIG. 3a is a diagram of the separator 1 according to an embodiment of the present disclosure. On the basis of the width direction of the separator 1, the total thickness of the separator 1 is kept constant, but interfaces 111, 121 between the porous substrate 10 and the first and second porous coating layers 11, 12, respectively, have a curved shape that is convex towards the adjacent porous substrate.
FIG. 3b is a diagram of the separator 1 according to an embodiment of the present disclosure. In FIG. 3b, the dashed line (1) indicates the center of the separator 1 in the width direction (Y).
FIG. 3c is a diagram of the separator 1 according to an embodiment of the present disclosure. In FIG. 3c, the dashed line (m) indicates the center of the separator 1 in the thickness direction (Z).
FIG. 4 shows a cross section of the electrode assembly 2 in the length direction (Y), the electrode assembly 2 assembled by an AZS or ZZS method using the separator 1 according to an embodiment of the present disclosure.
FIG. 5 is a diagram of a coating bar 4 used to form a porous coating layer according to an embodiment of the present disclosure.
FIG. 6 is an image showing the evaluation result of electrolyte wettability of a separator according to Comparative Example 1 of the present disclosure.
FIG. 7 is an image showing the evaluation result of electrolyte wettability of a separator according to Example 1 of the present disclosure.

### DETAILED DESCRIPTION

Hereinafter, the present disclosure will be described in detail with reference to the accompanying drawings.

In the drawings, the size of each element or a particular part of the element is exaggerated, omitted or schematically shown for convenience and clarity of description. Accordingly, the size of each element does not fully reflect the actual size. When it is determined that a detailed description of related known functions or elements may unnecessarily obscure the subject matter of the present disclosure, the description is omitted. Hereinafter, the present disclosure will be described in detail.

It should be understood that "comprise(s)" or "include(s)" when used in this specification, specifies the presence of stated elements but does not preclude the presence or addition of one or more other elements unless the context clearly indicates otherwise.

It should be further understood that "A and/or B" when used in this specification, specifies either A or B, or both.

The terms as used in the following detailed description are for the purpose of convenience, but not intended to being limiting. The terms 'upper', 'lower', 'left', 'right', 'front', 'rear', 'inner', 'outer' refer to directions in the drawings to which reference is made, or directions toward or away from the geometrical centers of the stated devices, systems and elements.

The present disclosure relates to a separator, an electrode assembly including the same and an electrochemical device including the same. The electrochemical device may include, for example, a primary battery, a secondary battery, a super capacitor, an electrical double-layer capacitor. More specifically, the secondary battery may be a lithium ion secondary battery.

According to an aspect of the present disclosure, there is provided a separator for use in an electrochemical device.

In the specification, the separator may come in various shapes. For example, the separator may have a strip shape that is longer in the length direction than the width direction. However, the present disclosure is not limited thereto.

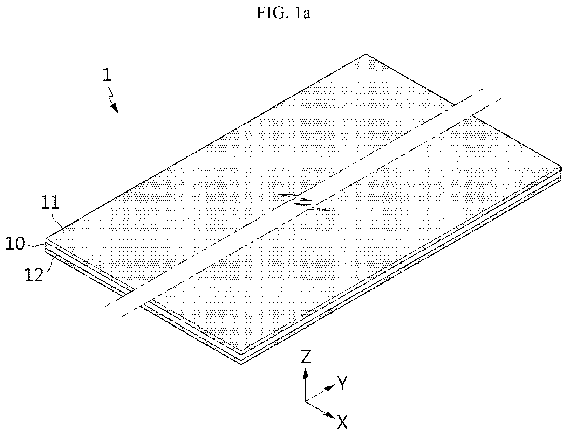

In the specification, the length direction, width direction and thickness direction of the separator 1 are described with reference to FIG. 1a. In FIG. 1a, the X direction indicates the length direction of the separator 1, the Y direction indicates the width direction of the separator 1, and the Z direction indicates the thickness direction of the separator 1.

In an embodiment of the present disclosure, the separator 1 may have the strip shape having an aspect ratio of 1 or more, and in this instance, the long side of the separator may be present in the length direction (X direction), and the short side may be present in the width direction (Y).

Referring to the drawings, the separator 1 according to an embodiment of the present disclosure includes a porous substrate 10 and porous coating layers 11, 12 on at least one surface of the porous substrate. In this instance, the separator may be characterized in that the thickness in the thickness direction (Z direction) is kept constant all over the separator in the length direction.

Referring to FIG. 2a, in an embodiment of the present disclosure, the separator 1 may be for use in a ZZS type electrode assembly or an advanced-Z-stacking (AZS) type electrode assembly in which the separator 1 is folded in a zigzag and unit electrodes are inserted at the overlapped portion of the separator 1, but the use of the present disclosure is not limited thereto.

Referring to FIG. 2b, the diagram shows the electrode assembly 3 in which the separator 1 is folded in a zigzag, the unit electrodes 21, 22 are inserted at the folded and overlapped portion of the separator, and each electrode tab 221, 222 is formed at an end of each unit electrode.

In the specification, the length direction, width direction and thickness direction of the electrode assembly 3 may be described with reference to FIG. 2b. In FIG. 2b, the X direction indicates the width direction of the electrode assembly 2, the Y direction indicates the length direction of the electrode assembly 2, and the Z direction indicates the thickness direction of the electrode assembly 2.

In an embodiment of the present disclosure, the electrode assembly, to which the separator is applied, has the positive electrode tab 211 or the negative electrode tab 222, each electrode tab at each end in the length direction, and may be applied to a cell that is long in the length direction. Additionally, each of the positive electrode tab 211 and the negative electrode tab 222 may be present at one or two ends in the same direction on the basis of the length direction. However, the present disclosure is not limited thereto.

In an embodiment of the present disclosure, the electrode assembly using the separator has a ZZS or AZS type electrode assembly structure including the plurality of unit electrodes and the separator between the unit electrodes, wherein the separator has the aspect ratio of 1 or more, the separator is folded in a zigzag and the unit electrode is inserted at the overlapped portion of the separator.

The separator 1 according to an aspect of the present disclosure includes the porous substrate 10 and the porous coating layers 11, 12 including inorganic particles, each porous coating layer on each of two surfaces of the porous substrate.

The porous substrate may include any type substrate for the separator without limitation, and will be described below.

The porous coating layer is a coating layer including inorganic particles to improve safety of the separator. Because the porous coating layer includes the inorganic particles, the weight of the separator may increase with the increasing size of the separator, for example, the increasing length of the separator.

The separator according to an aspect of the present disclosure includes the porous coating layer on each of the two surfaces of the porous substrate. In this instance, in the specification, for convenience of description, the porous coating layer on one surface of the porous substrate may be referred to as the 'first porous coating layer 11', and the porous coating layer on the other surface of the porous substrate may be referred to as the 'second porous coating layer 12'.

Additionally, in the specification, for convenience of description, the interface between the porous substrate and the first porous coating layer may be referred to as the 'first interface 111', and the interface between the porous substrate and the second porous coating layer may be referred to as the 'second interface 121'.

In the specification, the "long side direction" of the separator refers to a direction on the side of the longer one of the horizontal length and the vertical length of the separator. Specifically, the separator is a strip type separator having the aspect ratio of 1 or more, and more specifically more than 1, and two or more unit electrodes are disposed on the separator. In this instance, the long side direction indicates a direction in which the unit electrode is disposed. In general, the 'long side direction' of the separator may match a direction in which the separator or the electrode assembly travels in the process of manufacturing the separator or the process of manufacturing the electrode assembly using the same. Referring to the foregoing description, the length direction (X direction) of the separator 1 may be the long side direction.

In the specification, the "short side direction" of the separator refers to a direction on the side of the shorter one of the horizontal length and the vertical length of the separator. Referring to the foregoing description, the width direction (Y direction) of the separator 1 may be the short side direction.

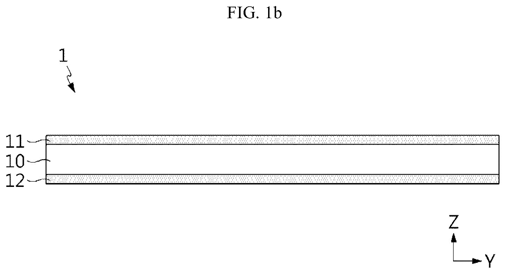

FIG. 1b shows the side of the separator 1 in the width direction, the separator 1 having the first porous coating layer 11 and the second porous coating layer 12, each porous coating layer on each of the two surfaces of the porous substrate 10. FIG. 1b shows the side of the separator 1 having the aspect ratio of 1 or more in the width direction, and each of the porous coating layers 11, 12 and the porous substrate 10 has a uniform thickness in the width direction.

In the case in which each of the porous coating layer and the porous substrate has a uniform thickness on the basis of the width direction of the separator as shown in FIG. 1b, when an electrode assembly formed by folding the separator is placed in a case and an electrolyte is injected, it may be impossible to achieve sufficient wetting by electrolyte deep in the central portion of the separator.

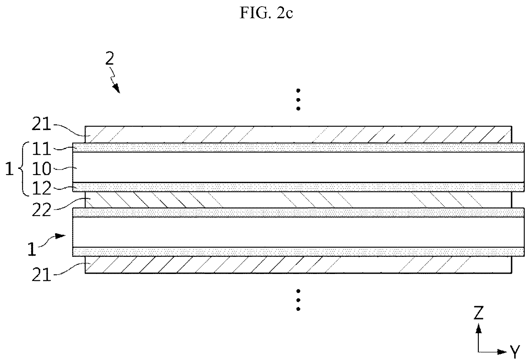

Referring to FIGs. 2a and 2c, this problem may become more serious as the thickness of the electrode assembly increases, in other words, the number of separators stacked increases, the size of the separator increases, for example, the length of the separator in the width direction and/or length direction increases, causing performance degradation of the battery.

To solve this problem, the separator according to an aspect of the present disclosure has the aspect ratio of 1 or more, the total thickness is kept constant all over the separator, and on the basis of the width direction of the separator, the interface between the porous substrate and each porous coating layer has a curved shape that is convex towards the porous substrate.

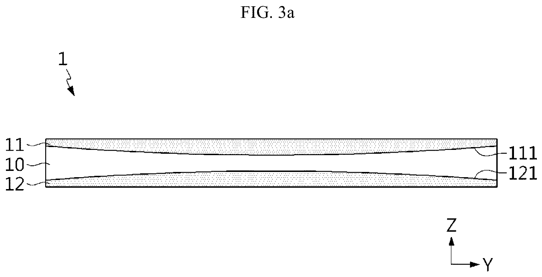

FIGs. 3a to 3c show the side of the separator 1 according to an aspect of the present disclosure. Specifically, the separator 1 has the aspect ratio of 1 or more, and FIG. 3a shows the side of the separator in the width direction (Y direction).

Referring to FIG. 3a, the separator 1 has the porous coating layers 11, 12, each porous coating layer on each of the two surfaces of the porous substrate 10. In this instance, on the basis of the width direction of the separator, the interfaces 111, 121 between the porous substrate 10 and the porous coating layers 11, 12, respectively, have a curved shape that is convex towards the porous substrate 10.

Specifically, referring to FIG. 3a, on the basis of the width direction of the separator, the first interface 111 between the porous substrate 10 and the first porous coating layer 11 has a curved shape that is convex towards the first porous substrate 10 at the central portion. Additionally, on the basis of the width direction of the separator, the second interface 121 between the porous substrate 10 and the second porous coating layer 12 has a curved shape that is convex towards the porous substrate 10 at the central portion.

Accordingly, the separator according to an aspect of the present disclosure may have a structure in which the thickness of the porous substrate gradually decreases down to the minimum thickness and then gradually increases on the basis of the width direction from one end to the other end of the separator.

According to an embodiment of the present disclosure, the porous substrate having a thickness gradient in the width direction as described above may be formed by adjusting thickness adjustment screws of an extruder outlet when forming an extruded sheet in the method commonly used to manufacture the separator substrate. Specifically, the separator substrate may be manufactured by the commonly used method after feeding a polymer resin as the raw material into an extruder and extruding through a T-die. In this instance, the extruder may have the plurality of adjustment screws to adjust the thickness of the extruded product coming out of the T-die. The extruded sheet having a smaller thickness of the central portion and a larger thickness of the two ends in the width direction is formed by adjusting the screws such that the screws at the central portion of the T-die outlet are more tight and the screws at the two ends are less tight when the polymer resin comes out of the T-die. Subsequently, the extruded sheet may be cast and stretched in each of the width direction (TD) and the travel direction (or length direction, MD) to manufacture the separator substrate having the above-described shape. However, the present disclosure is not limited thereto.

Additionally, the separator according to an aspect of the present disclosure may have a structure in which the thickness of the porous coating layer gradually increases up to the maximum thickness and then gradually decreases on the basis of the width direction from one end to the other end of the separator.

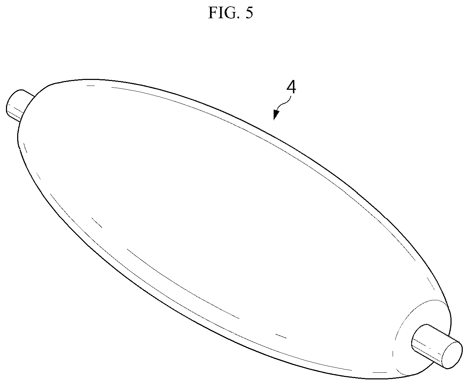

According to an embodiment of the present disclosure, on the porous substrate having a thickness gradient in the width direction as described above, to form the porous coating layer to keep the total thickness of the separator constant, a coating bar having different thickness depending on location may be used to form the porous coating layer. Specifically, FIG. 5 is a diagram of the coating bar 4 used to form the porous coating layer according to an embodiment of the present disclosure. Referring to FIG. 5, the separator whose total thickness is kept constant may be manufactured by coating a slurry for forming the porous coating layer on at least one surface, preferably two surfaces of the porous substrate using the coating bar having a larger thickness at the central portion than the two ends. However, the present disclosure is not limited thereto.

As described above, the separator according to an aspect of the present disclosure may have a structural feature in which the thickness of each of the porous substrate and the porous coating layer changes depending on location in the width direction, and the total thickness of the separator, i.e., the sum of the thickness of the porous substrate and the thickness of the first and second porous coating layers is kept constant.

In the specification, "the total thickness of the separator is kept constant" represents that a thickness value measured at an arbitrary location within a certain area by the same method lies in the error range of 5% or less. Specifically, when a difference between thickness values at two random locations within a certain area is 5% or less, 4% or less, 3% or less, 2% or less, 1% or less or 0% (i.e., no difference), it can be said that the thickness is kept constant.

In the specification, "the thickness gradually increases" represents that a thickness value measured by the same method along a predetermined directionality within a certain area continuously or discontinuously increases. The rate of increase of the thickness value may be constantly maintained within the error range of 5% or less, and may discontinuously change, but preferably, gradually increasing in thickness may represent that the thickness value continuously increases at a constant ratio.

In the specification, "the thickness gradually decreases" represents that a thickness value measured by the same method along a predetermined directionality within a certain area continuously or discontinuously decreases. The rate of decrease of the thickness value may be constantly maintained within the error range of 5% or less, and may discontinuously change, but preferably, gradually decreasing in thickness may represent that the thickness value continuously decreases at a constant ratio.

In the specification, unless otherwise defined, the "thickness" of each component may indicate a measured value using a thickness measuring tool commonly used to measure the thickness of the separator of the battery. For example, the thickness measuring tool may be available from Mitutoyo VL-50S, but is not limited thereto.

In an embodiment of the present disclosure, the thickness of the porous substrate may be measured after removing the porous coating layer from the separator. For example, the thickness measurement may be performed on the porous substrate remaining after removing the porous coating layer using a solvent that dissolves the porous coating layer included in the separator.

In an embodiment of the present disclosure, the thickness of the porous coating layer may be measured by measuring the thickness of the separator and subtracting the thickness of the porous substrate measured as described above from the thickness of the separator, but the measuring method is not limited thereto.

According to an embodiment of the present disclosure, a location at which the thickness of the porous substrate is the minimum thickness, in other words, a location at which the thickness of the porous coating layer is the maximum thickness may change depending on the poorly wetting or unwetting location of electrolyte in the separator of the electrode assembly when manufacturing the electrode assembly using the separator.

For example, when manufacturing the electrode assembly using the separator and placing it in the case, followed by electrolyte injection, in the case in which the electrolyte is supplied with the equal density all over the electrode assembly and the amount of electrolyte reaching the central portion of the separator is reduced, the location at which the thickness of the porous coating layer is the maximum thickness may be preferably the central portion of the separator in the width direction.

In an embodiment of the present disclosure, when manufacturing the electrode assembly using the separator and placing it in the case, followed by electrolyte injection, in the case in which the amount of electrolyte reaching 1/3 of the electrode assembly in the length direction is reduced by the shape of the case, the location at which the thickness of the porous coating layer is the maximum thickness may be 1/3 of the separator in the width direction.

According to an embodiment of the present disclosure, when manufacturing the electrode assembly using the separator and placing it in the case, followed by electrolyte injection, it may be general that the amount of electrolyte reaching 1/2 of the electrode assembly in the length direction is reduced, and the thickness of the porous coating layer may be largest at the center of the separator in the width direction. Specifically, the thickness of the porous coating layer may be largest at 50% of the total length 100% in the width direction.

It may represent that the thickness of the porous coating layer is smallest at the outermost end of the separator in the width direction. Specifically, the thickness of the porous coating layer may be largest at 50% of the total length 100% in the width direction.

In an embodiment of the present disclosure, the thickness of the porous substrate at the center, for example, 50% of the total width of the separator may be 40% to 55% of the total thickness of the separator. For example, the thickness of the porous substrate at 50% of the total width of the separator may be 40% to 50% or 45% to 50% of the total thickness of the separator.

In an embodiment of the present disclosure, the thickness of the porous substrate at two ends, for example, 0% or 100% of the total width of the separator may be 50% to 70% of the total thickness of the separator. For example, the thickness of the porous substrate at 0% or 100% point of the total width of the separator may be 55% to 65% or 60% of the total thickness of the separator.

In an embodiment of the present disclosure, a difference between the maximum thickness and the minimum thickness of the porous substrate in the separator may be from 1 *µ*m to 5 *µ*m, from 1.5 *µ*m to 4 *µ*m, or from 2 *µ*m to 3.5 *µ*m, specifically 2 *µ*m.

In an embodiment of the present disclosure, the difference in thickness between the central portion and the end portion of the porous substrate on the basis of the width direction of the separator may be from 1 *µ*m to 5 *µ*m, from 1.5 *µ*m to 4 *µ*m, or from 2 *µ*m to 3.5 *µ*m, specifically 2 *µ*m.

According to an embodiment of the present disclosure, the curved shape of the interface between the porous substrate and the porous coating layer may be symmetrical with respect to the center of the separator in the width direction.

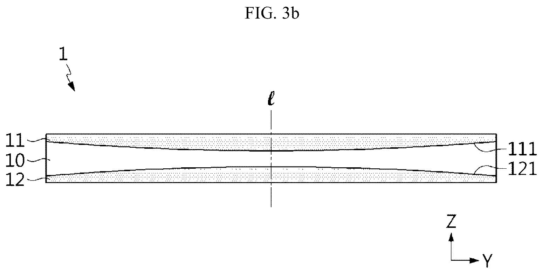

In FIG. 3b, in the side of the separator according to an embodiment of the present disclosure in the width direction, the center in the width direction is indicated by the dashed line (l).

Referring to FIG. 3b, in the separator according to an embodiment of the present disclosure, the first interface between the porous substrate 10 and the first porous coating layer 11 may have a symmetrical shape with respect to the center of the separator 1 in the width direction (the dashed line l). Additionally, the second interface between the porous substrate 10 and the second porous coating layer 12 may have a symmetrical shape with respect to the center of the separator 1 in the width direction (the dashed line l).

According to another embodiment of the present disclosure, the curved shapes of the two interfaces may be symmetrical with respect to the center of the separator in the thickness direction.

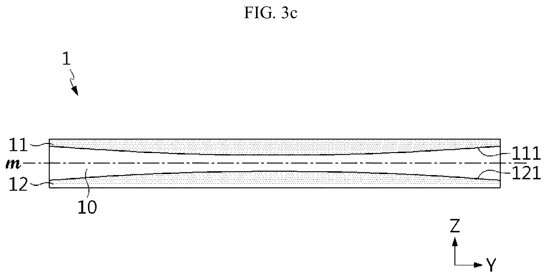

In FIG. 3c, in the side of the separator according to an embodiment of the present disclosure in the width direction, the center in thickness direction is indicated by the dashed line (m).

Referring to FIG. 3c, the separator according to an embodiment of the present disclosure may have the curved shapes of the first interface and the second interface that are symmetrical with respect to the center of the separator 1 in the thickness direction (the dashed line m).

According to another embodiment of the present disclosure, the separator may have a structure in which the curved shape of each of the first interface and the second interface is symmetrical with respect to the center (l in FIG. 3b) in the width direction, and the curved shapes of the first interface and the second interface are symmetrical with respect to the center (m in FIG. 3c) in the thickness direction.

According to an embodiment of the present disclosure, the separator may have a symmetrical structure with respect to the center in the width direction (the dashed line l in FIG. 3b). Specifically, on the basis of the center of the separator in the width direction, at random points that are an equal distance spaced apart from the center to the two ends, the thickness of the porous substrate may be equal to each other, and the thickness of the porous coating layer may be equal to each other. More specifically, when the location of the center is 50% of the total length 100% of the separator in the width direction, the thickness of the porous substrate at 40% and the thickness of the porous substrate at 60% may be equal to each other. Additionally, the thickness of the first porous coating layer at 40% and the thickness of the first porous coating layer at 60% may be equal to each other. Additionally, the thickness of the second porous coating layer at 40% and the thickness of the second porous coating layer at 60% may be equal to each other.

According to an embodiment of the present disclosure, the porous coating layer on each of the two surfaces of the porous substrate may be symmetrical with respect to the center of the separator in the thickness direction (the dashed line m in FIG. 3c). That is, the separator 1 may have a structure of a line symmetrical shape with respect to the center in the thickness direction. Accordingly, the thickness of each of the first porous coating layer and the second porous coating layer located on the same line in the thickness direction (Z direction) of the separator perpendicular to the width direction of the separator may be equal to each other.

In the specification, the "equal thickness" includes thicknesses having a thickness difference of ±5% or less in view of an error in the manufacturing process or a measurement error as described above.

In an embodiment of the present disclosure, the thickness of the porous substrate may be, for example, 40% to 90% of the total thickness 100% of the separator. Specifically, the thickness of the porous substrate at the central portion may be 40% of the total thickness 100% of the separator, and for the first interface and the second interface to have a curved surface, as it goes toward the two ends of the separator in the width direction, the thickness of the porous substrate may gradually increase and reach 90% at the two ends of the separator in the width direction.

According to an embodiment of the present disclosure, when the thickness of the porous substrate is, for example, 40% to 90% of the total thickness 100% of the separator, the thickness of each of the first porous coating layer and the second porous coating layer may be 5% to 30% of the total thickness 100% of the separator.

In another embodiment of the present disclosure, the thickness of the porous substrate may be, for example, 40% to 70% of the total thickness 100% of the separator. Specifically, the thickness of the porous substrate at the two ends may be from 50% to 70%, for example, 60% of the total thickness 100% of the separator, and for the first interface and the second interface to have a curved surface, as it goes toward the central portion of the separator in the width direction, the thickness of the porous substrate may gradually decrease and reach 40% to 60%, for example, 40% to 55%, 40% to 50%, or 45% at the center of the separator in the width direction.

According to another embodiment of the present disclosure, when the thickness of the porous substrate is, for example, 40% to 70% of the total thickness 100% of the separator, the thickness of each of the first porous coating layer and the second porous coating layer may be 15% to 30% of the total thickness 100% of the separator.

In an embodiment of the present disclosure, the separator may have a strip shape. Specifically, the strip type separator may be a separator of a long strip shape having a predetermined width, and specifically, refers to a separator of a rectangular shape having the aspect ratio of 1 or more, specifically more than 1. More specifically, the length of the long side of the separator may be from 1.5 to 5 m, specifically from 1.8 to 4.8 m.

Hereinafter, the porous substrate and the porous coating layer will be described by way of example. However, the separator according to an aspect of the present disclosure is of the above-described new shape, and is not limited by the components of each of the porous substrate and the porous coating layer.

In an embodiment of the present disclosure, the porous substrate refers to a substrate having pores to act as a porous ion-conducting barrier that allows ions to pass through but prevents an electrical contact between the negative electrode and the positive electrode. The pores are connected to each other to allow gases or liquids to go from one side to the other side of the substrate.

In an embodiment of the present disclosure, the porous substrate may comprise a porous polymer film including a thermoplastic resin to provide a shutdown function. Here, the shutdown function refers to a function in which when the temperature of the battery rises, the thermoplastic resin melts, the pores of the porous substrate close to stop further ion transport, thereby preventing thermal runaway in the battery.

In an embodiment of the present disclosure, the thermoplastic resin used in the porous substrate may be preferably a thermoplastic resin of less than 200°C. Additionally, the thermoplastic resin may include, for example, those that may be used as the substrate of the separator without limitation. For example, the thermoplastic resin may include polyolefin, polyethyleneterephthalate, polybutyleneterephthalate, polyacetal, polyamide, polycarbonate, polyimide, polyetheretherketone, polyethersulfone, polyphenyleneoxide, polyphenylenesulfide, polyethylenenaphthalene or a mixture thereof, but is not limited thereto.

In an embodiment of the present disclosure, the porous substrate may be a polyolefin substrate.

In an embodiment of the present disclosure, when the thickness of the porous substrate satisfies the aforementioned range based on the total thickness of the separator, the thickness of the porous substrate is not limited to a particular range, but may be, for example, from 5 *µ*m to 300 *µ*m, specifically from 5 *µ*m to 100 *µ*m, from 5 *µ*m to 50 *µ*m, from 5 *µ*m to 20 *µ*m, from 5 *µ*m to 15 *µ*m or from 9 *µ*m to 12 *µ*m.

In an embodiment of the present disclosure, the porous coating layer includes the inorganic particles and may further include a binder resin, and all or at least part of the surface of the inorganic particles may be coated by the binder resin. In this instance, the inorganic particles are held together by surface bonding and/or point bonding by medium of the binder resin. For example, the inorganic particles and the binder resin in the porous coating layer may be included at a weight ratio of from 95:5 to 50:50. The porous coating layer has micropores therein such that the micropores are connected to each other, and has a structural feature of a porous layer that allows gases or liquids to go from one side to the other side.

In an embodiment of the present disclosure, the porous coating layer may have a pore structure originating from the pores corresponding to voids (interstitial volume) between the inorganic particles. The pore size or porosity (a volume ratio of pores) may be adjusted according to the particle size and particle size distribution. This structure may increase resistance to metal impurities present in the electrode and suppress shrinkage of the porous polyolefin substrate, thereby enhancing safety of the electrochemical device.

In an embodiment of the present disclosure, the porous coating layer may include a plurality of nodes including the inorganic particles and the binder polymer that covers at least part of the surface of the inorganic particles; and at least one filament formed in the shape of a thread from the binder polymer of the nodes, wherein the filament has a node connection part that extends from the node and connects the node to other node, and the node connection part has a 3-dimensional network structure formed by interconnection of the filaments originating from the binder polymer.

In an embodiment of the present disclosure, as described above, the porous coating layer may be formed through a Safety Reinforced Separator (SRS) manufacturing method, a Ceramic Coated Separator (CCS) manufacturing method or any other known manufacturing method, but is not limited thereto.

In an embodiment of the present disclosure, the inorganic particles are not limited to a particular type and may include those which are electrochemically stable. That is, the inorganic particles that may be used in the present disclosure are not limited to a particular type and may include those in which oxidation and/or reduction reaction does not occur in the operating voltage range (for example, 0 to 5V vs Li/Li⁺) of the electrochemical device applied. Non-limiting examples of the inorganic particles may include at least one of BaTiO₃, Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC or TiO₂.

In an embodiment of the present disclosure, when the porous coating layer includes the binder resin, the binder resin may include, for example, a polyvinylidene fluoride-based resin (PVdF-based resin). In an embodiment of the present disclosure, the PVdF-based resin may include at least one of a homopolymer (i.e., polyvinylidene fluoride) of vinylidene fluoride, a copolymer of vinylidene fluoride with a monomer that can copolymerize with the vinylidene fluoride or a mixture thereof. In an embodiment of the present disclosure, the monomer may include, for example, a fluorinated monomer and/or a chloride-based monomer. Non-limiting examples of the fluorinated monomer may include at least one of vinyl fluoride; trifluoroethylene (TrFE); chlorofluoroethylene (CTFE); 1,2-difluoroethylene; tetrafluoroethylene (TFE); hexafluoropropylene (HFP); perfluoro(alkylvinyl)ether such as perfluoro(methylvinyl)ether (PMVE), perfluoro(ethylvinyl)ether (PEVE) and perfluoro(propylvinyl)ether (PPVE); perfluoro(1,3-dioxole); and perfluoro(2,2-dimethyl-1,3-dioxole) (PDD).

In an embodiment of the present disclosure, when the thickness of each of the porous coating layers satisfies the aforementioned ratio range based on the total thickness of the separator, the thickness of the porous coating layer is not limited to a particular range, but for example, may be from 0.5 to 50 *µ*m, specifically from 1 *µ*m to 10 *µ*m, from 1.5 *µ*m to 5 *µ*m, from 2 *µ*m to 4 *µ*m or from 3 *µ*m to 4 *µ*m.

In an embodiment of the present disclosure, the first porous coating layer and the second porous coating layer may have the same composition, but may be formed with different compositions if necessary, and the present disclosure is not limited thereto.

Through the above-described structure, the separator according to an aspect of the present disclosure may improve the electrolyte wettability all over the separator and have a beneficial effect in improving the performance of the electrochemical device using the same, but the effect of the present disclosure is not limited thereto.

According to another aspect of the present disclosure, there is provided the electrode assembly using the above-described separator.

Specifically, referring to FIG. 2a, the electrode assembly 2 has a structure in which the above-described separator 1 is folded in a zigzag, and the unit positive electrode 21 and the unit negative electrode 22 are arranged in an alternating manner at the plurality of areas in which the separator is folded and overlapped.

The electrode assembly according to an embodiment of the present disclosure may include the unit positive electrode, the unit negative electrode and the separator between the unit positive electrode and the unit negative electrode, wherein the unit positive electrode includes a plurality of unit positive electrodes arranged spaced apart from each other on one surface of the separator, the unit negative electrode includes a plurality of unit negative electrodes arranged spaced apart from each other on the other surface of the separator, on the basis of the long side direction of the separator, the location at which the unit positive electrode is disposed and the location at which the unit negative electrode is disposed do not overlap, and the separator is the above-described separator.

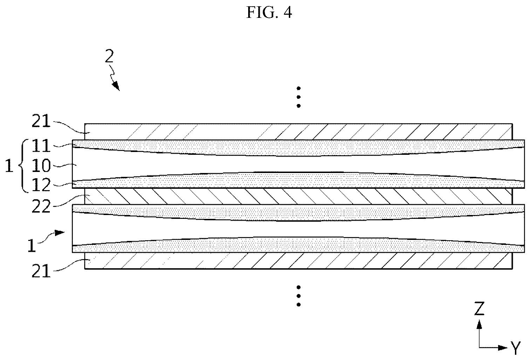

FIG. 4 shows a cross section of the electrode assembly 2 according to an embodiment of the present disclosure in the length direction (Y).

Referring to FIG. 4, the electrode assembly 2 includes the separator 1 folded in a zigzag, and the plurality of unit positive electrodes 21 and the plurality of unit negative electrodes 22 arranged in an alternating manner at the plurality of areas in which the separator is folded and overlapped.

According to an embodiment of the present disclosure, because the electrode assembly has a structure in which the plurality of unit electrodes is arranged on each of one surface and the other surface of the strip type separator, the total length of the electrode assembly when unfolded may be, for example, from 1 m to 4.5 m, specifically from 1.2 m to 4.3 m.

As described above, the electrode assembly according to another aspect of the present disclosure has the long strip shape, but may improve the electrolyte wettability of the central portion and achieve sufficient wetting by electrolyte all over the entire separator due to the unique structure of the separator. Accordingly, it may be possible to improve the electrolyte wettability of the long electrode assembly (or the thick electrode assembly) and improve the stability and productivity of the battery, but the effect of the present disclosure is not limited thereto.

In an embodiment of the present disclosure, the unit electrode may be a positive electrode and/or a negative electrode commonly used in the electrochemical device, and each of the positive electrode and the negative electrode may include a current collector and a coating of electrode active material on the current collector, and its size or shape is not limited to a particular one.

In an embodiment of the present disclosure, when the electrode is a positive electrode, the positive electrode active material may include, for example, lithium transition metal oxide; lithium metal iron phosphate; lithium nickel-manganese-cobalt oxide; lithium nickel-manganese-cobalt oxide partially substituted by other transition metal; or two or more of them, but is not limited thereto. Specifically, the positive electrode active material may include, for example, layered compounds such as lithium cobalt oxide (LiCoO₂), lithium nickel oxide (LiNiO₂) or compounds substituted by one or more transition metal; lithium manganese oxide of Chemical Formula Li₁₊ₓMn₂₋ₓO₄ (x is from 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site type lithium nickel oxide represented by Chemical Formula LiNi₁₋ₓMₓO₂ (M = Co, Mn, Al, Cu, Fe, Mg, B or Ga, x = 0.01 to 0.3); lithium manganese composite oxide represented by Chemical Formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); lithium metal phosphate LiMPO₄ (M = Fe, Co, Ni, or Mn); lithium nickel-manganese-cobalt oxide Li₁₊ₓ(NiₐCo_{b}Mn_{c})₁₋ₓO₂ (x = 0 to 0.03, a = 0.3 to 0.95, b = 0.01 to 0.35, c = 0.01 to 0.5, a+b+c=1); lithium nickel-manganese-cobalt oxide Liₐ[Ni_{b}Co_{c}Mn_{d}Alₑ]_{1-f}M1_{f}O₂ partially substituted by aluminum (M1 is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1); lithium nickel-manganese-cobalt oxide Li₁₊ₓ(NiₐCo_{b}Mn_{c}M_{d})₁₋ₓO₂ partially substituted by other transition metal (x = 0 to 0.03, a = 0.3 to 0.95, b = 0.01 to 0.35, c = 0.01 to 0.5, d = 0.001 to 0.03, a+b+c+d=1, M is any one selected from the group consisting of Fe, V, Cr, Ti, W, Ta, Mg and Mo), disulfide compounds; Fe₂(MoO₄)₃, but is not limited thereto.

In an embodiment of the present disclosure, when the electrode is a negative electrode, the negative electrode active material may include, for example, lithium metals or lithium alloys, soft carbon, hard carbon, natural graphite, Kish graphite, pyrolytic carbon, mesophase pitch based carbon fibers, meso-carbon microbeads, mesophase pitches, petroleum or coal tar pitch derived cokes or a mixture thereof, but is not limited thereto.

In an embodiment of the present disclosure, each of the unit positive electrode and the unit negative electrode may include the electrode tab at an end.

According to an embodiment of the present disclosure, the electrode tab of each of the unit positive electrode and the unit negative electrode may be disposed at the same end in the length direction of the electrode assembly. Alternatively, the electrode tab of each of the unit positive electrode and the unit negative electrode may be disposed at each of two opposite ends in the length direction of the electrode assembly. The present disclosure is not limited thereto.

According to another aspect of the present disclosure, there may be provided the electrochemical device including the above-described electrode assembly and a case accommodating the electrode assembly.

In an embodiment of the present disclosure, the case may include those commonly used as a battery case, and its shape is not particularly limited by the use of the battery. For example, the case may be cylindrical, prismatic, pouch-type or coin-type in shape using a can.

When the electrode assembly is completed, the electrode assembly may be placed in the case, followed by electrolyte injection and case sealing by a commonly used method to manufacture the electrochemical device, and in this instance, the electrochemical device may be, for example, a lithium secondary battery.

Hereinafter, the present disclosure will be described in more detail through examples, but the following description is provided to describe the present disclosure by way of example, and the scope of the present disclosure is not limited thereto.

### [Manufacture of separator]

Separators of Example 1 and Comparative Example 1 were manufactured as follows.

In this instance, FIG.2 shows the shape of the side of the separator of Example 1, and FIG. 1b shows the shape of the side of the separator of Comparative Example 1.

### Example 1

### Manufacture of porous substrate

Three types of polyethylene polymer having different molecular weights, a polypropylene polymer and an anti-oxidation agent were fed into an extruder at a proper ratio and mixed to form an extruded sheet through a T-die, followed by casting to form a polyolefin-based precursor film, and the polyolefin-based precursor film was stretched in each of MD direction and TD direction to obtain a porous substrate. In this instance, the three types of polyethylene polymer used were PE 40 (Mw 400,000 g/mol), PE 90 (Mw 900,000 g/mol) and PE 150 (Mw 1,500,000 g/mol), and the polypropylene polymer was PP 35 (Mw 350,000 g/mol).

Additionally, when forming the extruded sheet through the T-die, screws at the central portion of the outlet of the T-die were more tight and screws at the two ends were less tight to obtain the extruded sheet in a shape that the central portion of the porous substrate in the width direction is thinner and the thickness increases in a curved shape toward the two ends. The porosity of the porous substrate finally manufactured after the stretching was 45 vol%.

The porous substrate was manufactured while adjusting the gap of the T-die to reduce the thickness in a curved shape that is convex towards the porous substrate from two ends to the central portion such that the total width (short side, Y direction) is 500 mm, the length (long side, X direction) is 4 m, the thickness measured at each of two ends of the short side is 9 *µ*m and the thickness at the center of the short side, i.e., at a location of 250 mm is 7 *µ*m.

### Manufacture of porous coating layer

A PVDF-HFP binder (Mw 500,000 g/mol, HFP 15 wt%) and inorganic particles were added to an appropriate solvent at a weight ratio of 5:95 and mixed to prepare an inorganic coating slurry.

The as-prepared inorganic coating slurry was applied to two surfaces of the porous substrate using a coating bar having the shape shown in FIG. 5 and dried to form a porous coating layer on each of the upper surface and the lower surface of the porous substrate.

The porous coating layer on each of the upper surface and the lower surface was formed with an increasing thickness in a curved shape that is convex towards the porous substrate from the two ends to the center (at a location of 250 mm) such that the thickness measured at each of two ends of the short side was 3 *µ*m, and the thickness at the center was 4 *µ*m.

Accordingly, a separator was manufactured with the total thickness constantly maintained at 15 *µ*m all over the separator.

### Comparative Example 1

### Manufacture of porous substrate

A porous substrate was manufactured by the same method as Example 1 except that the porous substrate had a constant thickness of 9 *µ*m without a thickness change all over the entire width direction (short side).

### Manufacture of porous coating layer

A porous coating layer was formed by the same method as Example 1 except that the porous coating layer had a constant thickness of 3 *µ*m without a thickness change all over the entire width direction (short side).

Accordingly, a separator was manufactured with a constant total thickness of 15 *µ*m in the width direction.

TABLE 1 summarizes the thickness of each component at two ends (0%, 100%) and center (50%) on the basis of the total length 100% of the as-prepared separator of Example 1 and Comparative Example 1 in the width direction.

**[TABLE 1]**

| Classification | Example 1 | | | Comparative Example 1 | | |
|---|---|---|---|---|---|---|
| | Total length in width direction (100%) | | | Total length in width direction (100%) | | |
| | End (0%) | Center (50%) | End (100%) | End (0%) | Center (50%) | End (100%) |
| First porous coating layer (*µ*m) | 3 | 4 | 3 | 3 | 3 | 3 |
| Porous substrate (*µ*m) | 9 | 7 | 9 | 9 | 9 | 9 |
| Second porous coating layer (*µ*m) | 3 | 4 | 3 | 3 | 3 | 3 |
| Total thickness (*µ*m) | 15 | 15 | 15 | 15 | 15 | 15 |

### [Evaluation of properties of separator]

A battery was manufactured as follows in order to evaluate electrolyte wetting and battery capacity by the following evaluation method.

A positive electrode active material (LiNi_{0.8}Mn_{0.1}Co_{0.1}O₂), a conductive material (carbon black), a dispersant and a binder resin (a mixture of PVDF-HFP and PVDF) were mixed with water at a weight ratio of 97.5:0.7:0.14:1.66 to prepare a slurry for a positive electrode active material layer such that the concentration of the remaining components except water was 50 wt%. Subsequently, the slurry was applied to the surface of an aluminum foil (thickness 10 *µ*m) and dried to manufacture a positive electrode having a positive electrode active material layer (thickness 120 *µ*m).

Graphite (natural graphite/artificial graphite blend), a conductive material (carbon black), a dispersant and a binder resin (a mixture of PVDF-HFP and PVDF) were mixed with water at a weight ratio of 97.5:0.7:0.14:1.66 to prepare a slurry for a negative electrode active material layer such that the concentration of the remaining components except water was 50 wt%. Subsequently, the slurry was applied to the surface of a copper foil (thickness 10 *µ*m) and dried to manufacture a negative electrode having a negative electrode active material layer (thickness 120 *µ*m).

19 sheets of the positive electrode and 20 sheets of the negative electrode as manufactured above were prepared, the separator as manufactured above was folded in a zigzag and the positive electrode and the negative electrode were inserted between the folded portions in an alternating manner and stacked to prepare a Z-folded electrode assembly.

Subsequently, the electrode assembly was placed in a pouch-type case, and an electrolyte solution in which 1M LiPF₆ is dissolved in a mixed solvent of 1,3-dioxolane:dimethoxyethane (DOL:DME 1:1 v/v) was injected, followed by aging and degassing, to manufacture a battery.

### Electrolyte wetting evaluation

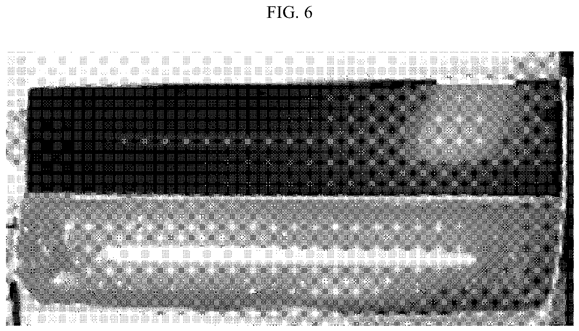

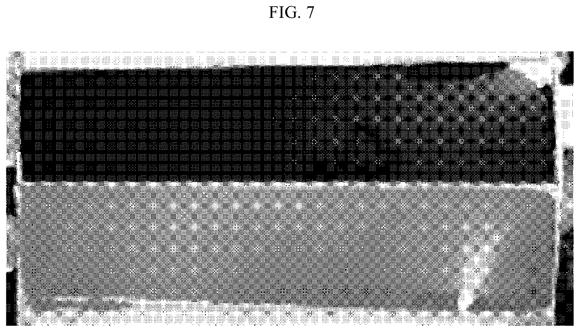

When disassembling the as-prepared battery at SOC 60, FIG. 6 is an image of the separator of Comparative Example 1 and FIG. 7 is an image of the separator of Example 1. In this instance, each separator was observed with the naked eye through a brightness difference in an unwetted area by electrolyte.

### Initial capacity evaluation

The battery was repeatedly charged and discharged three cycles with a current of 0.33C in a voltage range between 2.5 V and 4.3 V using an electrochemical charger/discharger, then the capacity of the battery was measured, and the results are shown in TABLE 2 below.

**[TABLE 2]**

| Classification | | Theoretical capacity | Initial capacity |
|---|---|---|---|
| Separator | Comparative Example 1 | 160 Ah | 150 Ah |
| | Example 1 | | 159 Ah |

Through FIGs. 6 and 7 and the results of TABLE 2, it was confirmed that the use of the separator according to an embodiment of the present disclosure may achieve good electrolyte wettability all over the entire separator, and obtain further improved effect in achieving the theoretical capacity of the battery.

In particular, it was confirmed that according to FIG. 6 and the results of TABLE 2, non-uniform electrolyte wetting resulted in lower capacity than the theoretical capacity and Comparative Example 1 had notably low initial capacity, while according to FIG. 7 and the results of TABLE 2, uniform electrolyte wetting resulted in sufficient capacity compared to theoretical capacity and Example 1 had remarkably high initial capacity.

While the present disclosure has been hereinabove described with reference to the embodiments and drawings, it is obvious to persons having ordinary skill in the technical field pertaining to the present disclosure that a variety of changes and modifications may be made within the scope of the present disclosure based on the foregoing description.

### [List of Reference Numerals]

1: Separator
10: Porous substrate
11: First porous coating layer
12: Second porous coating layer
111: First interface
121: Second interface
2: Electrode assembly
21: Unit positive electrode
22: Unit negative electrode
211: Positive electrode tab
222: Negative electrode tab
3: Electrode assembly
4: Coating bar

## Claims

1. A separator comprising:
a porous substrate; and
a porous coating layer on each of two surfaces of the porous substrate, the porous coating layer including inorganic particles,
wherein a total thickness of the separator is kept constant all over the separator,
wherein the separator has an aspect ratio of 1 or more, and
wherein based on a width direction of the separator, an interface between the porous substrate and each of the porous coating layers has a curved shape that is convex towards the porous substrate.

2. The separator according to claim 1, wherein the porous substrate is thinnest at a center of the separator in the width direction.

3. The separator according to claim 1, wherein the porous substrate is thickest at an outermost end of the separator in the width direction.

4. The separator according to claim 1, wherein the curved shape of the interface between the porous substrate and the porous coating layer is symmetrical with respect to a center of the separator in the width direction.

5. The separator according to claim 1, wherein the curved shapes of the two interfaces are symmetrical with respect to a center of the separator in a thickness direction.

6. The separator according to claim 1, wherein a thickness of the porous substrate is from 40% to 90% of the total thickness 100% of the separator.

7. The separator according to claim 1, wherein a thickness of the porous substrate is from 45% to 65% of the total thickness 100% of the separator.

8. The separator according to claim 1, wherein a thickness of the porous substrate is from 40% to 55% of the total thickness of the separator at 50% of a total width of the separator.

9. The separator according to claim 1, wherein a thickness of the porous substrate is from 50% to 70% of the total thickness of the separator at 0% or 100% of a total width of the separator.

10. The separator according to claim 1, wherein a length of the separator in a length direction is from 1.5 to 5 m.

11. An electrode assembly comprising:
a unit positive electrode, a unit negative electrode and a separator between the unit positive electrode and the unit negative electrode,
wherein the separator is folded in a zigzag,
wherein the unit positive electrode and the unit negative electrode are arranged in an alternating manner at a plurality of areas in which the separator is folded and overlapped, and
wherein the separator is defined in any one of claims 1 to 10.

12. The electrode assembly according to claim 11, wherein each of the unit positive electrode and the unit negative electrode includes an electrode tab at an end.

13. An electrochemical device comprising:
the electrode assembly according to claim 11; and
a case accommodating the electrode assembly.

14. The electrochemical device according to claim 13, wherein the electrochemical device is a lithium secondary battery.

15. The electrochemical device according to claim 13, wherein the case has a pouch-type, prismatic, cylindrical or coin-type shape.
